Europäisches Patentamt

European Patent Office

Office européen des brevets

(11) Publication number: **0 371 607**
**A2**

## (12) EUROPEAN PATENT APPLICATION

(21) Application number: **89310913.2**

(22) Date of filing: **23.10.89**

(51) Int. Cl.5: **H04L 12/54**

(30) Priority: **29.11.88 US 277602**

(43) Date of publication of application:
**06.06.90 Bulletin 90/23**

(84) Designated Contracting States:
**DE FR GB IT**

(71) Applicant: **international Business Machines
Corporation
Old Orchard Road
Armonk, N.Y. 10504(US)**

(72) Inventor: **Heyen, John Gary
1747 Conrad Circle
Carrollton, TX 75007(US)**
Inventor: **Kasiraj, Chander
2133 North Aspenwood
Grapevine, TX 76051(US)**
Inventor: **Wolf, Timothy James
2621 Cummings Drive
Bedford, TX 76021(US)**

(74) Representative: **Grant, Iain Murray
IBM United Kingdom Limited Intellectual
Property Department Hursley Park
Winchester Hampshire SO21 2JN(GB)**

(54) Electronic mail systems.

(57) A method is disclosed for confirming and controlling the transmission of multiple electronic mail objects. A confirmation log is created in accordance with the method of the present invention and a copy of each electronic mail object designated by the sender as requiring confirmation is stored therein along with a plurality of descriptive elements associated therewith. After transmission of each electronic mail object its status is periodically monitored to determine whether or not delivery has been achieved. Retransmission of a stored copy of an electronic mail object is accomplished in response to the failure of delivery to take place. Parametric or contextual searches through all pending electronic mail objects stored within the confirmation log may be accomplished by using the stored descriptive elements to locate and identify a particular electronic mail object.

Fig. 1

## ELECTRONIC MAIL SYSTEMS

This invention relates in general to improvements in electronic mail systems and in particular to methods whereby a sender of electronic mail may confirm and control the transmission of multiple electronic mail objects. Based on such arrangements, it is sought to provide methods whereby a sender of multiple items of electronic mail may automatically store for subsequent retransmission a plurality of electronic mail objects.

Electronic mail or "E-Mail" systems are well known in the prior art. By "electronic mail" what is meant is a system whereby messages may be sent and/or received between two computers or work stations. For example, two computers coupled together by a Local Area Network (LAN) may be used to communicate detailed messages between the operators thereof. Similarly, two interactive work stations coupled to a central processor may also be used to transmit or receive electronic mail messages by using well known communication techniques.

While known electronic mail systems do provide an enhanced method of communication which may be used in situations where all parties in the communication loop are not on-line at all times, there are certain disadvantages inherent in such systems. For example, it is often desirable for the sender of an item of electronic mail to determine with a high degree of certainty whether or not the item has been electronically transmitted to the correct location.

This particular problem has been addressed in selected electronic mail systems which provide a confirmation notification when a distribution is "delivered" or placed in a recipient's "in-basket." While this technique represents an improvement over previously known electronic mail systems, it is often desirable to provide the sender with a higher level of information regarding the activities of an electronic mail recipient. Therefore, it should be obvious that a need exists for an electronic mail system which will satisfy this requirement.

Additionally, it is possible to store multiple electronic mail objects for possible future use by retaining such objects in a storage facility, such as a document library. While electronic mail objects occasionally need to be stored to ensure that delivery has been achieved, such storage is only necessary for a short period of time and conventional storage techniques soon clutter a sender's memory space with unnecessary documents. Therefore, it should be obvious that a need exists for a method whereby a sender may temporarily store and organise multiple electronic mail objects for a short period of time until confirmation of delivery of such objects has been received.

It is therefore one object of the present invention to provide an improved electronic mail system.

The present invention provides a method for confirming and controlling the transmission of multiple electronic mail objects, the method comprising the steps of:
designating a plurality of electronic mail objects for which confirmation and control is desired;
creating a confirmation log containing an indication of the identity of each of the designated electronic mail objects and storing each such object;
transmitting the plurality of electronic mail objects;
monitoring the status of each of the transmitted electronic mail objects; and
subsequently searching the confirmation log to locate a particular identified one of the selected mail objects.

One form of such arrangement disclosed hereinafter comprises an electronic mail system wherein a sender may automatically store selected electronic mail objects until confirmation of delivery has been received. The sender may store a plurality of descriptive elements relating to each of a designated plurality of electronic mail objects whereby individual electronic mail objects may be subsequently located and identified using a search of the descriptive elements.

The arrangement uses a confirmation log which is created and used to store a copy of each electronic mail object which is designated by the sender as requiring confirmation of its delivery. A plurality of descriptive elements is also stored within the confirmation log associated with each electronic mail object. After transmission of each electronic mail object, its status is periodically monitored to determine whether or not delivery has been achieved. Retransmission of the stored copy of an electronic mail object is accomplished in response to the failure of delivery to occur within a selected period of time. Parametric or contextual searches through all pending electronic mail objects may be simply and efficiently accomplished by using the stored descriptive elements within the confirmation log to locate and identify a particular electronic mail object.

The present invention will be described further by way of example with reference to an embodiment thereof as illustrated in the accompanying drawings, in which:

Figure 1 is a logic flow chart of the operations performed; and

Figure 2 is a logic flow chart showing one way in which the confirmation is used.

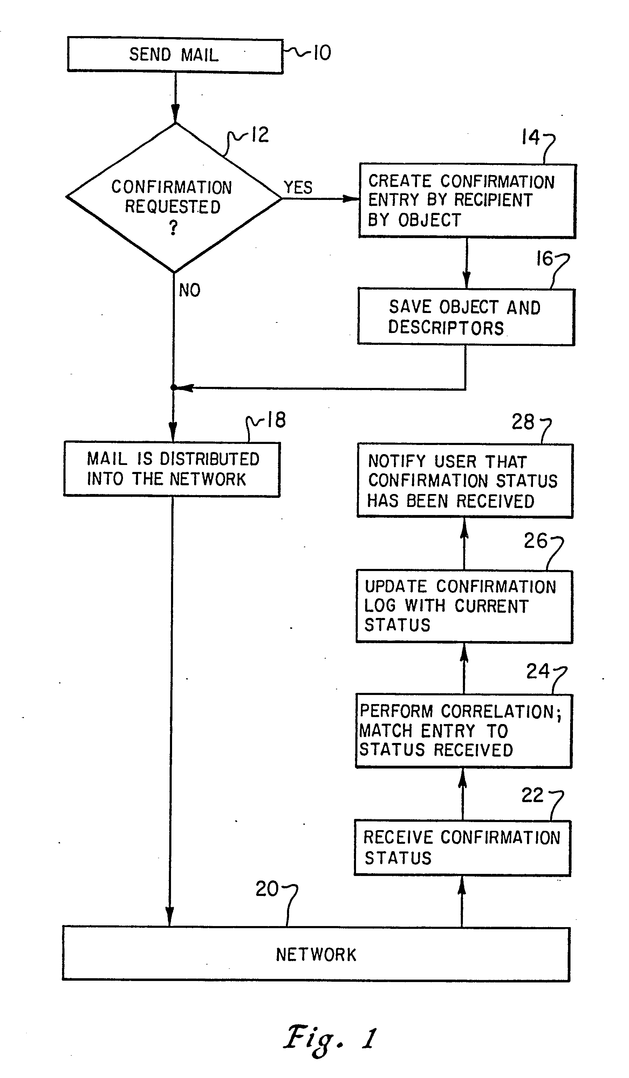

Figure 1 provides a logic flow chart which begins at block 10 with the decision of a user to send an electronic mail object. Next, block 12 illustrates the determination of whether or not the sender has requested a confirmation for the particular electronic mail object being sent. If not, the mail is distributed into the network, as depicted by block 18 and coupled to network 20. Those skilled in the art will appreciate that network 20 may constitute a Local Area Network (LAN), coupled to a plurality of personal computers, or a plurality of interactive work stations which are each coupled via network 20 to a central processing unit.

In the event the sender has requested a confirmation for a particular electronic mail object, as determined by block 12, then block 14 illustrates the creation of a confirmation log entry by recipient or by mail object. Next, in accordance with an important feature of the present invention, block 16 illustrates the saving or storing of the electronic mail object and its associated descriptors. By descriptors what is meant is a series of descriptive elements which characterise the electronic mail object. For example, the descriptors may include details regarding the recipients and distribution of a particular electronic mail object in addition to descriptive elements which characterise the subject matter and textual content of an electronic mail object. By storing a copy of each electronic mail object for which confirmation is desired, the method of the present invention provides the capability of redistributing a particular electronic mail object in the event confirmation of delivery is not received in a timely manner. Similarly, the storing of associated descriptors in a confirmation log provides the user with the ability to perform contextual or parametric searches on the electronic mail objects which are stored within the confirmation log. In this manner, the user may retrieve an electronic mail object from the confirmation log based upon the contextual information contained within that object, or based upon the recipient to whom the object was sent. Additionally, those skilled in the art will appreciate that these different types of descriptors may be combined to locate and identify a particular electronic mail object dealing with a specified subject matter which was sent to a particular recipient. Thereafter, as above, the mail is distributed into network.20, as depicted in block 18.

After an electronic mail object has been distributed via network 20, a confirmation message may be generated in response to either the receipt of that electronic mail object by a selected recipient or an activity of that recipient. In either case, the confirmation status message is transmitted via network 20 back to the sender where it is received, as illustrated in block 22. Next, the confirmation status message received is correlated with the plurality of confirmation entries which are present in the confirmation log and the confirmation status message is thereby matched to a particular electronic mail object.

After receiving a confirmation status message and correlating that message with one or more of the multiple confirmation entries contained within the confirmation log, the confirmation log status is then updated, as depicted in block 26. Finally, in accordance with the method of the present invention, the sender receives a notification that a confirmation status message has been received.

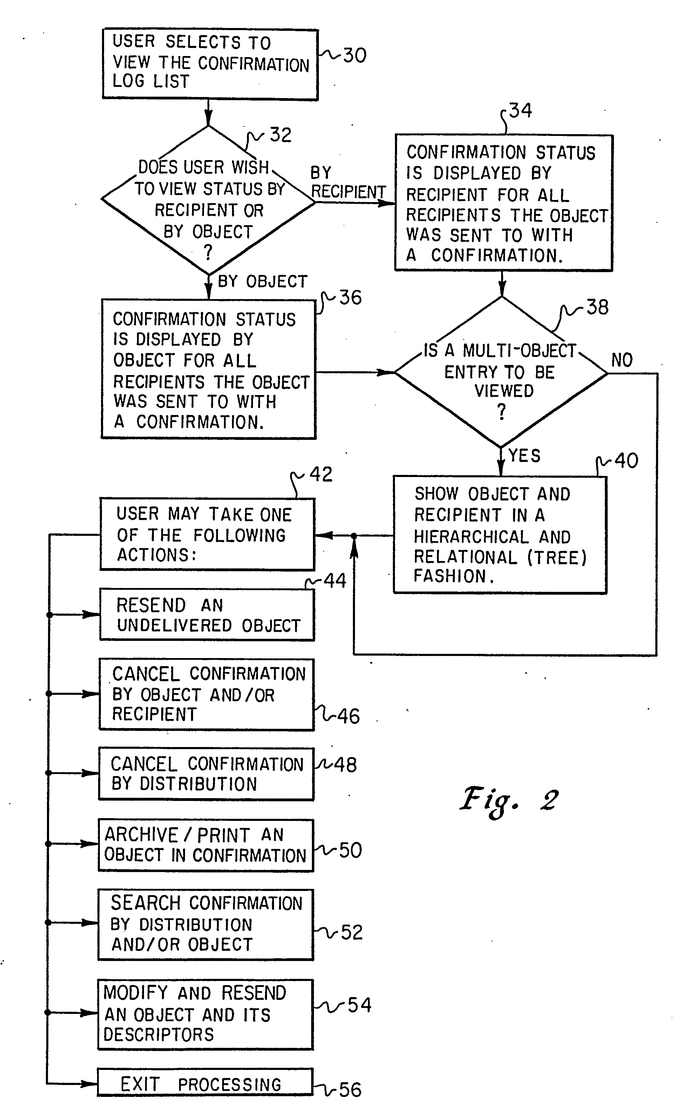

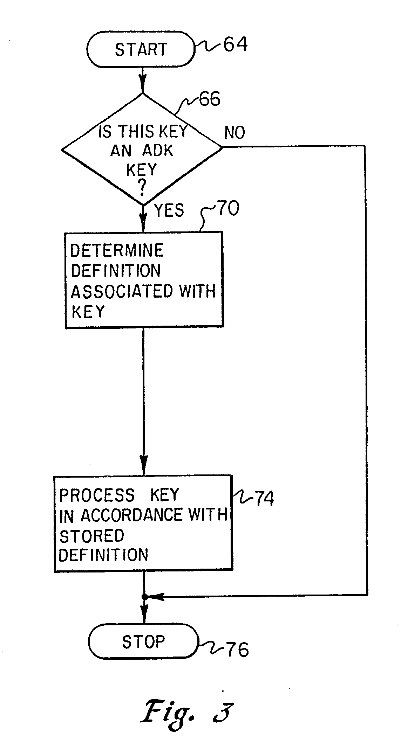

Referring now to Figure 2, there is depicted a logic flow chart illustrating the use of a confirmation log in such an arrangement. As may be seen, the process begins at block 30 where a user selects the option of viewing the confirmation log list. Next, as determined by block 32, the user must indicate whether or not he or she wishes to view the confirmation log list status organised by recipient or by electronic mail object.

In the event the user wishes to view the status of each message by recipient, block 34 illustrates the displaying of the confirmation status by recipient for all recipients to whom the electronic mail object was sent with a confirmation requirement. In the event the user wished to view the status of a particular electronic mail object by mail object, then block 36 depicts the displaying of the confirmation status by mail object for all recipients to whom the object was sent with a confirmation requirement.

Thereafter, block 38 is used to determine whether or not the particular electronic mail object to be viewed is a multiple component object. If not, the process proceeds to block 42. In the event the electronic mail object to be viewed is a multiple component object, then block 40 illustrates the displaying of the mail object and recipient data in a hierarchical and relational fashion. This particular display may be graphically implemented using a "tree" type display.

Thereafter, the user may take one of the following actions, as depicted in block 42. The user may elect to retransmit an undelivered electronic mail object, as illustrated in block 44. Those skilled in the art will appreciate that by storing a copy of each electronic mail object for which confirmation is required retransmission of such objects may be efficiently and rapidly accomplished. Additionally, such retransmission may be automatically generated in response to the failure of the electronic mail object to achieve a delivered status within a predesignated period of time. In order to enhance the efficiency of the use of the confirmation log, those skilled in the art will appreciate that the confirmation log may be controlled so as to delete the copy of an electronic mail object contained therein after delivery status has been accomplished.

Next, as illustrated in blocks 46 and 48, the user may elect to cancel a confirmation requirement by mail object and/or by recipient, or by distribution. The user may also elect archive or print an electronic mail object which is listed within the confirmation log, by using the copy of that electronic mail object stored therein, as illustrated in block 50.

Next, the user may search the confirmation log by distribution and/or by object to locate and identify a particular electronic mail object by its textual content or by selected recipient. This search technique may be provided using simple search methods in conjunction with the stored list of descriptors for each electronic mail object stored within the confirmation log, as illustrated in block 52.

Next, the user may modify an resend any electronic mail object stored within the confirmation log, as depicted in block 54. By using this technique, the user may locate and modify a particular electronic mail object which is present within the confirmation log. Such modifications may change the associated descriptors associated with the electronic mail object and such descriptors must also then be changed in order to preserve the search capability discussed back to block 52.

Finally, the user may elect to discontinue processing, as depicted in block 52.

It will be appreciated that, by using a confirmation log in this way, it is possible to automatically store a copy of any electronic mail object for which conformation of delivery is required in case subsequent retransmission is necessary. Additionally, by storing the electronic mail object in conjunction with a plurality of descriptive elements, it will be possible for a user to rapidly and efficiently search through a large number of electronic mail objects to identify and locate a particular electronic mail object using either textual or parametric search techniques. Allied material is disclosed and claimed in co-pending applications ... (AT9-88-031 and AT9-88-038).

## Claims

1. A method for confirming and controlling the transmission of multiple electronic mail objects, the method comprising the steps of:
designating a plurality of electronic mail objects for which confirmation and control is desired;
creating a confirmation log containing an indication of the identity of each of the designated electronic mail objects and storing each such object;
transmitting the plurality of electronic mail objects;
monitoring the status of each of the transmitted electronic mail objects; and

subsequently searching the confirmation log to locate a particular identified one of the selected mail objects.

2. A method as claimed in Claim 1, wherein each object is stored in the confirmation log.

3. A method as claimed in either preceding Claim, wherein a plurality of descriptive elements are stored in the oonfirmation log in respect of each selected object from which a particular one of the selected objects can be identified.

4. A method as claimed in Claim 3, wherein the plurality of descriptive elements includes a description of the recipient of each of the plurality of electronic mail objects.

5. A method as claimed in Claim 3 or Claim 4, wherein the plurality of descriptive elements includes a description of the topic of each of the plurality of electronic mail objects.

6. A method as claimed in any preceding Claim, further including subsequently retransmitting the stored copy of a selected electronic mail object in response to the failure of the selected electronic mail object to achieve delivery within a given period of time.

7. A method as claimed in any preceding Claim, further including the step of selectively displaying at least a portion of the confirmation log.

8. A method as claimed in any preceding Claim, further including the step of storing an indication of the status of each of the electronic mail objects within the confirmation log.

*Fig. 1*

USER SELECTS TO
VIEW THE CONFIRMATION
LOG LIST ~30

DOES USER WISH
TO VIEW STATUS BY
RECIPIENT OR
BY OBJECT
? ~32

BY RECIPIENT

CONFIRMATION STATUS
IS DISPLAYED BY
RECIPIENT FOR ALL
RECIPIENTS THE OBJECT
WAS SENT TO WITH
A CONFIRMATION. ~34

BY OBJECT

CONFIRMATION STATUS
IS DISPLAYED BY
OBJECT FOR ALL
RECIPIENTS THE OBJECT
WAS SENT TO WITH
A CONFIRMATION. ~36

IS A MULTI-OBJECT
ENTRY TO BE
VIEWED
? ~38

NO

YES

SHOW OBJECT AND
RECIPIENT IN A
HIERARCHICAL AND
RELATIONAL (TREE)
FASHION. ~40

USER MAY TAKE ONE
OF THE FOLLOWING
ACTIONS: ~42

RESEND AN
UNDELIVERED OBJECT ~44

CANCEL CONFIRMATION
BY OBJECT AND/OR
RECIPIENT ~46

CANCEL CONFIRMATION
BY DISTRIBUTION ~48

ARCHIVE/PRINT AN
OBJECT IN CONFIRMATION ~50

SEARCH CONFIRMATION
BY DISTRIBUTION
AND/OR OBJECT ~52

MODIFY AND RESEND
AN OBJECT AND ITS
DESCRIPTORS ~54

EXIT PROCESSING ~56

*Fig. 2*

Fig. 3